# FASCICULE DE BREVET EUROPEEN

(11) **EP 1 255 060 B1**
(45) Date de publication et mention de la délivrance du brevet: **29.11.2006**
(21) Numéro de dépôt: 02356084.0
(22) Date de dépôt: 03.05.2002
(51) Int. Cl.: E06B 9/84, F16H 1/46

(54) **Reducteur epicycloidal et mecanisme de manoeuvre d'une installation de fermeture de protection solaire comprenant un tel reducteur**
Epicyclisches Untersetzungsgetriebe und Betätigungseinrichtung für eine diese Befestigungsvorrichtung enthaltende Sonnenschutzeinrichtung
Epicyclic reducer and sunshade and mechanism for actuating a sunshade with such a device

(30) Priorité: 04.05.2001 FR 0106026
(43) Date de publication de la demande: 06.11.2002
(73) Titulaire: SIMU, 70100 Arc-Les-Gray (FR)
(72) Inventeur: Bresson, Christophe, 70700 Cugney (FR)
(74) Mandataire: Myon, Gérard Jean-Pierre

(56) Documents cités:
- EP-A- 1 070 827
- DE-A- 3 623 612
- FR-A- 2 267 492
- FR-A- 2 468 986
- US-A- 4 417 185

## Description

L'invention a trait à un réducteur épicycloïdal et à un mécanisme de manoeuvre d'une installation de fermeture ou de protection solaire comprenant un tel réducteur.

Par l'installation de fermeture, on entend les portes, portails, volets et matériels équivalents.

Il est connu d'intégrer un réducteur d'un mécanisme de manoeuvre d'un arbre d'enroulement d'un tablier dans une installation de fermeture ou de protection solaire. Un tel réducteur peut être intégré entre un moteur électrique et un arbre d'enroulement ou entre un organe d'entraînement mécanique et un arbre d'enroulement.

Il est connu de prévoir un système de blocage de l'axe de sortie d'un réducteur en cas de rupture d'un de ses éléments constitutifs. DE-C-37 01 106, DE-A-43 24 866 et EP-A-0 787 885 divulguent des systèmes adaptés à des réducteurs à roue et vis sans fin mais qui ne peuvent pas être transposés à un réducteur de type épicycloïdal. Or, les réducteurs épicycloïdaux sont particulièrement adaptés à certaines configurations d'utilisation, notamment pour les moteurs tubulaires utilisés fréquemment dans le domaine des installations de fermeture ou de protection solaire. FR 2 267 492 refléte l'état de la technique.

C'est pourquoi, la présente invention vise à proposer un nouveau réducteur de type épicycloïdal dont le fonctionnement est sécurisé, dans la mesure où il est apte à bloquer son arbre de sortie en cas de rupture d'un de ses composants.

Dans cet esprit, l'invention concerne un réducteur épicycloïdal comprenant au moins un satellite qui peut avoir un mouvement de rotation autour d'un axe principal du réducteur et qui comporte un pignon en prise avec deux dentures pourvues de dents en nombres différents. Ce réducteur est caractérisé en ce que le satellite comprend un second pignon et un troisième pignon respectivement en prise chacun avec une des dentures précitées ou avec l'une de ces dentures pour l'un et avec un pignon d'entrée du réducteur, pour l'autre. Ce réducteur est également caractérisé en ce que le second pignon est solidaire en rotation et en translation d'un arbre apte à être entraîné en rotation par le premier pignon autour de l'axe principal alors que le troisième pignon est monté sur cet arbre, avec possibilité de rotation, en étant chargé contre un élément d'arrêt solidaire en rotation et en translation avec cet arbre, le troisième pignon étant apte à échapper à l'élément précité, par un mouvement de rotation autour de cet arbre, et à venir en prise avec une butée de blocage de la rotation du satellite autour de l'axe principal du réducteur, les second et troisième pignons ayant, en fonctionnement normal du réducteur, sensiblement la même vitesse angulaire de rotation.

Grâce à l'invention, en cas de rupture d'un élément constitutif du réducteur, notamment au niveau de l'engrènement du premier pignon avec l'une des deux dentures avec lesquelles il est en prise, il apparaît une vitesse angulaire différentielle entre les second et troisième pignons, ce qui a pour effet de faire tourner le troisième pignon par rapport à l'arbre solidaire du second pignon. Ceci permet au troisième pignon d'être dégagé par rapport à l'élément solidaire de cet arbre et de venir en prise avec une butée fixe. Ceci résulte dans une immobilisation ferme du troisième pignon, donc du satellite et du réducteur, et limite les risques de mouvements intempestifs de son organe de sortie.

Selon un mode de réalisation avantageux de l'invention, l'arbre précité du satellite traverse le premier pignon, avec possibilité de rotation. Selon un autre mode de réalisation, l'arbre précité du satellite est intégré dans un barillet formant des logements de réception des pignons.

Selon des aspects avantageux de l'invention, le réducteur incorpore une ou plusieurs des caractéristiques suivantes :
- Des moyens de charge élastique du troisième pignon en direction de l'élément d'arrêt et/ou de la butée sont prévus. Ils peuvent comprendre un ressort de compression intercalé autour de l'arbre précité entre les premier et troisième pignons ou entre le barillet et le troisième pignon.
- L'élément d'arrêt forme au moins une saillie selon une direction essentiellement radiale par rapport à l'arbre précité, le troisième pignon étant pourvu d'au moins une encoche de passage de cette saillie, dans certaines orientations angulaires du troisième pignon par rapport à l'arbre.
- La butée est formée sur une face interne d'une cloison d'un bâti fixe du réducteur. On peut, en particulier, prévoir que le bâti porte plusieurs butées réparties circulairement autour d'un axe central du réducteur, ce qui permet un blocage du réducteur avec un faible débattement angulaire en cas de rupture.
- Les premier, second et troisième pignons ont un même nombre de dents, les premier et second pignon engrenant ensemble sur la première des deux dentures précitées alors que les premier et troisième pignons engrènent ensemble sur la seconde de ces dentures.
- L'une au moins des dentures en prise avec le premier pignon porte un élément de maintien axial du satellite.
- Un arbre d'entrée est solidaire d'un pignon central en prise avec le premier pignon, l'organe de sortie du réducteur étant solidaire de l'une des deux dentures en prise avec le premier pignon.
- Le réducteur est irréversible, ce qui permet son blocage en cas de rupture dans la chaîne cinématique amont, par exemple entre le moteur d'entraînement d'un arbre d'enroulement de tablier et le réducteur associé.

L'invention concerne également un mécanisme de manoeuvre d'une installation de fermeture ou de protection solaire qui comprend un organe d'entraînement, mécanique ou électrique, pour un arbre d'enroulement d'un tablier et au moins un réducteur tel que précédemment décrit monté entre un arbre de sortie de cet organe d'entraînement et l'arbre d'enroulement. Un tel mécanisme de manoeuvre est sécurisé contre les risques de chute du tablier.

L'invention sera mieux comprise et d'autres avantages de celle-ci apparaîtront plus clairement à la lumière de la description qui va suivre d'un mode de réalisation d'une partie d'un mécanisme de manoeuvre d'une installation de fermeture conforme à son principe, donnée uniquement à titre d'exemple et faite en référence aux dessins annexés dans lesquels :
- la figure 1 est une coupe de principe d'un réducteur conforme à l'invention dans une première configuration d'utilisation ;
- la figure 2 est une coupe partielle selon la ligne II-II à la figure 1 ;

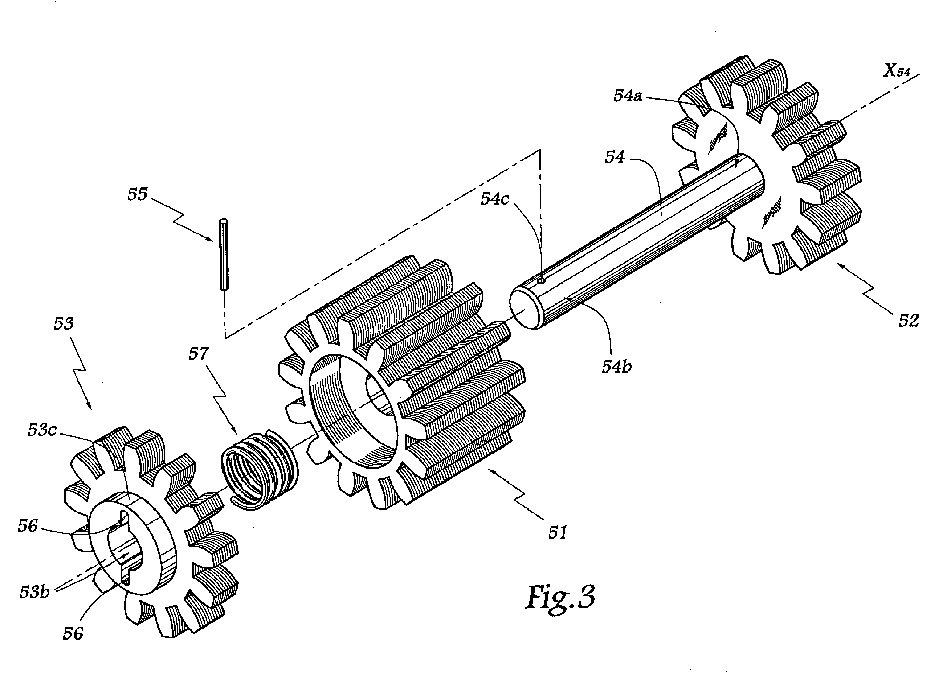

- la figure 3 est une vue en perspective éclatée d'un satellite du réducteur des figures 1 et 2 ;

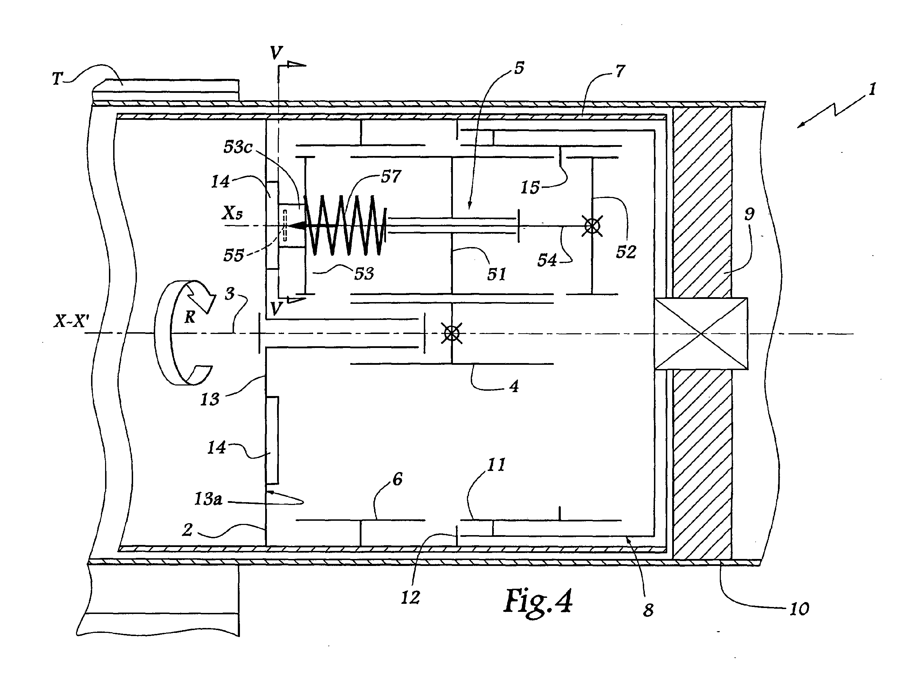

- la figure 4 est une vue analogue à la figure 1 lorsque le réducteur est en configuration bloquée ;
- la figure 5 est une coupe selon la ligne V-V à la figure 2 ;
- la figure 6 est une vue analogue à la figure 1, pour un réducteur conforme à un second mode de réalisation de l'invention ;
- la figure 7 est une vue en perspective d'un barillet utilisé dans le mode de réalisation de la figure 6 ; et
- la figure 8 est une vue analogue à la figure 6, pour un réducteur conforme à un troisième mode de réalisation de l'invention.

Le réducteur 1 représenté sur les figures comprend un bâti fixe 2 en forme de cloche centré sur un axe géométrique X-X'. Le bâti 2 permet de supporter un arbre 3 d'entrée du mouvement dans le réducteur, le mouvement étant représenté par une flèche de rotation R. L'arbre 3 est solidaire d'un pignon 4 destiné à engrener avec un ou plusieurs satellites, dont un seul est représentés sur les figures avec la référence 5. Le pignon 4 compte quinze dents.

Le bâti 2 supporte une denture 6 fixe à quarante sept dents et forme une jupe 7 de réception d'une cloche 8 reliée à une bride de sortie 9 du réducteur 1, la bride 9 étant destinée à être rendue solidaire d'un arbre 10 d'enroulement d'un tablier T d'une installation de fermeture.

La cloche 8 porte une denture 11 à cinquante dents.

Le bâti 2 porte une nervure périphérique interne 12 formant butée de positionnement de la cloche 8 dans la jupe 7.

Le satellite 5 comprend un premier pignon 51 à treize dents en prise à la fois avec le pignon 4 et les dentures 6 et 11.

Le satellite 5 comprend également un second pignon 52 et un troisième pignon 53 alignés avec le pignon 51 autour d'un axe géométrique X₅. Le pignon 53 est solidaire en rotation et en translation d'une première extrémité 54a d'un arbre 54 dont la seconde extrémité 54b est pourvue d'un perçage diamétral 54c de réception d'une goupille 55.

Lorsque la goupille 55 est montée dans l'orifice 54c, ses deux extrémités 55a et 55b s'étendent selon une direction radiale par rapport à l'axe longitudinal X₅₄ de l'arbre 54 qui, en configuration montée du réducteur, est confondu avec l'axe X₅. Les extrémités 55a et 55b font saillie radialement par rapport à l'arbre 54.

En configuration de fonctionnement du réducteur 1, l'arbre 54 traverse les pignons 51 et 53, de sorte que son extrémité 54b et la goupille 55 sont disposées entre le pignon 53 et une cloison d'extrémité 13 du bâti 2 et qu'il est entraîné en rotation par le pignon 51 autour de l'axe X-X' lorsque le pignon 4 tourne.

Pour pouvoir être traversé par l'extrémité 54b de l'arbre 54, le pignon 53 est pourvu de deux encoches 56 diamétralement opposées et dont les dimensions sont suffisantes pour laisser passer les extrémités 55a et 55b.

Le premier pignon 51 est monté libre en rotation sur l'arbre 54 mais tenu axialement par rapport à celui-ci par tout moyen approprié, par exemple grâce à un ou des circlips.

Une collerette annulaire 15 fait saillie par rapport à la denture 11 et est destinée à être insérée entre les pignons 51 et 52, ce qui permet de caler axialement le satellite 5 par rapport aux éléments 2 et 9.

Un ressort 57 est intercalé autour de l'axe 54 entre les pignons 51 et 53, ce ressort étant comprimé, de telle sorte qu'il exerce sur le pignon 53 un effort E ayant tendance à pousser le pignon 53 en direction de la cloison 13 puisque le satellite 5 est calé axialement.

On note 53c le moyeu du troisième pignon 53.

La cloison 13 porte, sur sa face interne 13a orientée vers le satellite 5 des butées 14 réparties circulairement autour de l'axe X-X' et faisant saillie par rapport à la cloison 14.

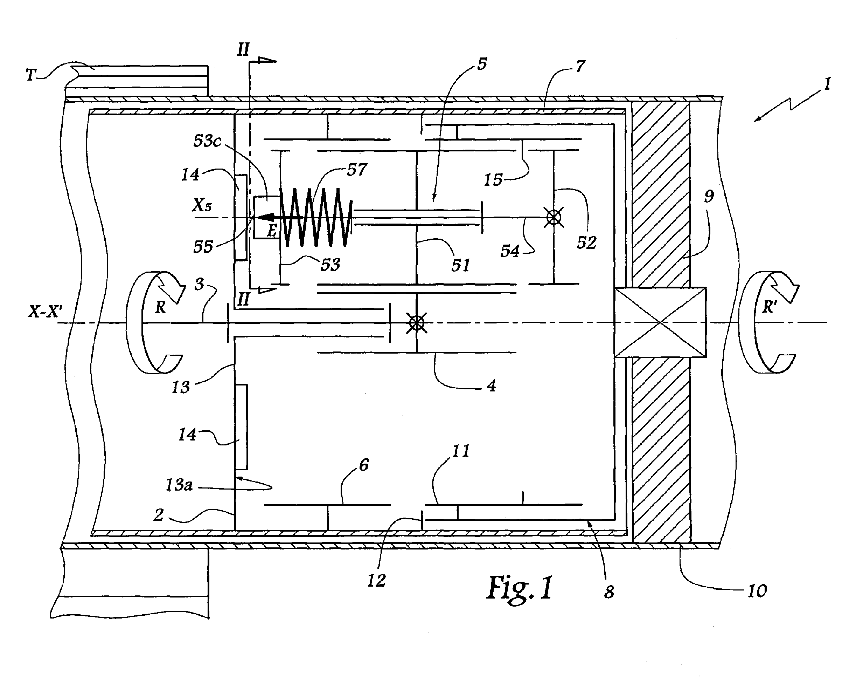

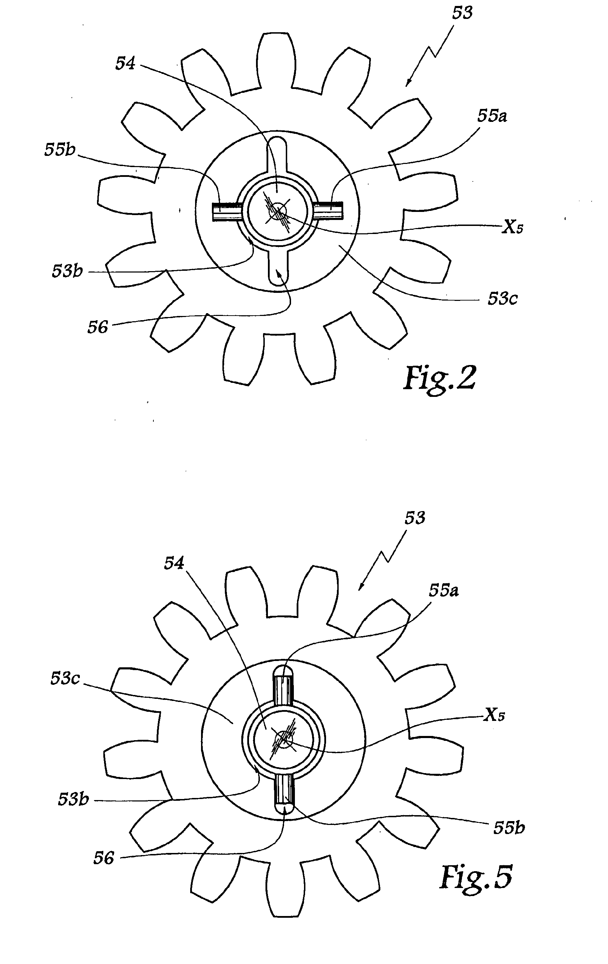

Lors de l'assemblage du satellite 5, l'extrémité 54b de l'arbre 54 équipée de la goupille 55 est introduite à travers une ouverture centrale 53d du troisième pignon, les extrémités 55a et 55b de la goupille 55 passant à travers les encoches 56. Ensuite, un mouvement de rotation d'environ 90° est imprimé à l'arbre 54 alors que le pignon 53 maintenu en position, de telle sorte que la goupille 55 est orientée sensiblement à 90° par rapport aux encoches 56. On est alors dans la configuration des figures 1 et 2. La goupille 55 constitue ainsi une butée d'arrêt à un mouvement du pignon 53, sous l'effort E, et permet de maintenir le moyeu 53c à distance des butées 14.

Au cours du fonctionnement normal du réducteur, celui-ci est dans la configuration des figures 1 et 2 et, si un mouvement de rotation R est imprimé à l'arbre 3, celui-ci est transmis par les pignons 4 et 51 à la denture 11 alors que la denture 6 constitue un point fixe, ce qui permet une mise en mouvement de la cloche 8 et de la bride 9 dans un sens ou dans l'autre autour de l'axe X-X'. L'arbre 10 est ainsi entraîné en rotation R' autour de l'axe X-X' pour l'enroulement ou le déroulement du tablier T.

Les trois pignons 51, 52 et 53 ayant le même nombre de dents, treize dans l'exemple représenté, ils ont tous la même vitesse angulaire, de sorte que l'orientation angulaire des pignons 52 et 53 et des éléments 55 et 56 l'un par rapport à l'autre demeure et que la goupille 55 conserve sa fonction de moyen d'arrêt du pignon 53 à l'encontre de l'effort E et que le moyeu 53c demeure éloigné de la cloison 13.

Si une rupture intervient entre le pignon 51 et l'une des dentures 6 ou 11, le synchronisme du mouvement des pignons 52 et 53 est interrompu et, du fait de la différence de vitesse angulaire de ces pignons, les encoches 56 sont amenées en regard des extrémités 55a et 55b. Dans ce cas, le pignon 53 est poussé par l'effort E dû au ressort 57 en direction de la cloison 13 et, sous l'effet de la rotation en cours, le moyeu 53c vient s'immobiliser contre l'une des butées 14.

Le satellite 5 dans son ensemble est alors bloqué en rotation autour de l'axe X-X'. En particulier, l'arbre 54 est bloqué en rotation autour de cet axe, de sorte que les premier et second satellites sont bloqués, de même que la denture 11, la cloche 8 et la bride 9. Ainsi, l'arbre 10 est bloqué en rotation autour de l'axe X-X' et le tablier T ne risque pas de descendre sous l'effet de son propre poids.

L'invention permet donc d'assurer un blocage de l'arbre d'enroulement 10 pour toute défaillance de la liaison cinématique entre les pignons 4 et 53 ou entre les pignons 52 et 53. En particulier, l'invention permet de réagir à une rupture de l'engrènement entre le premier pignon 51 et l'une des dentures 6 ou 11, ce qui est particulièrement adapté car c'est dans cette zone que le réducteur 1 est le plus sollicité.

Cependant, le système permet également de réagir à une rupture d'un autre composant de l'installation disposé en amont du réducteur 1. Pour cela, il suffit que le rapport de réduction défini entre le pignon 51 et les dentures 6 et 11 soit irréversible, ce qui est le cas dans l'exemple représenté.

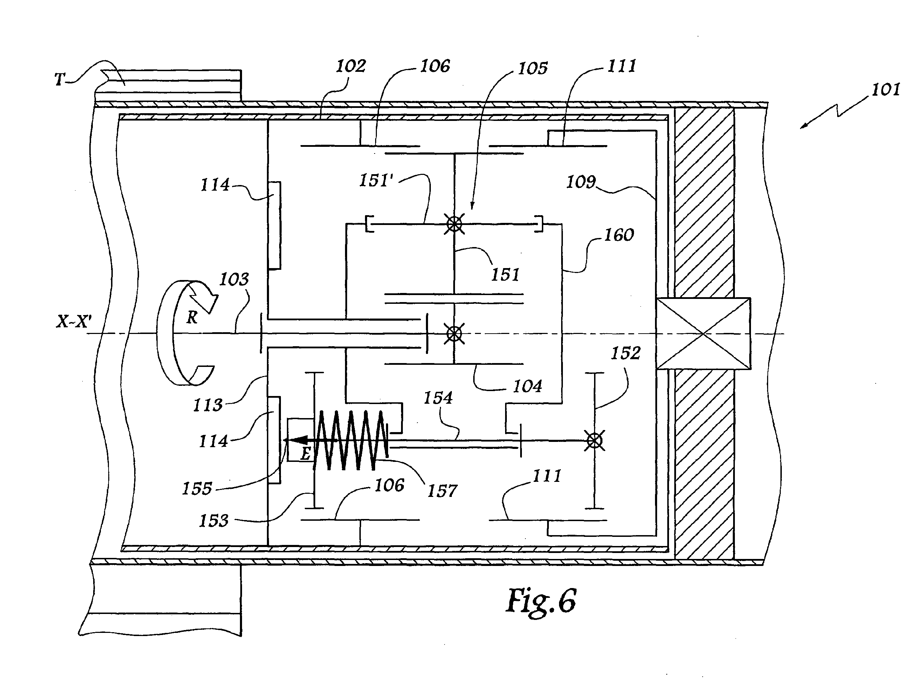

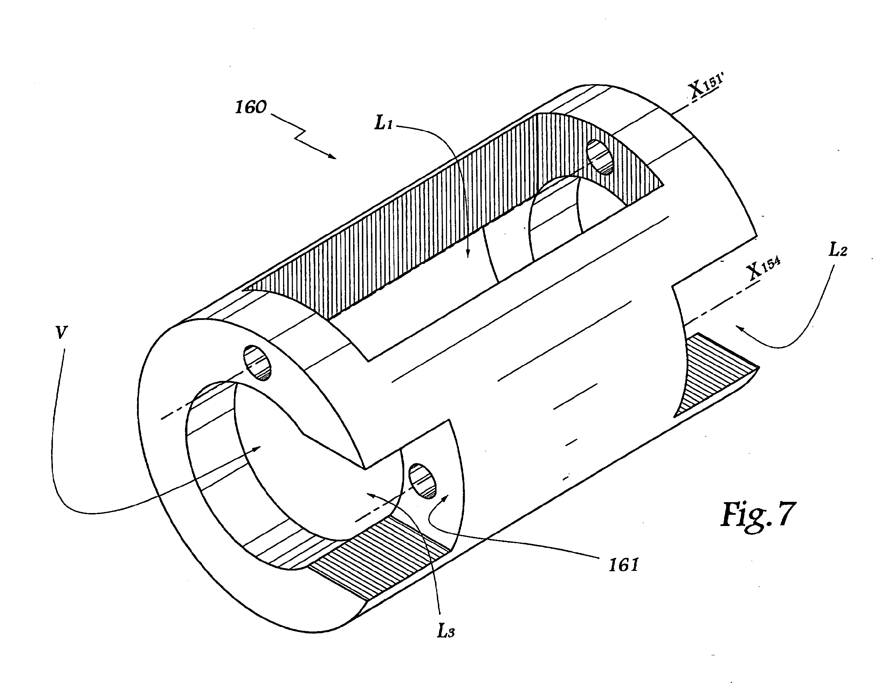

Dans le second mode de réalisation de l'invention représenté aux figures 6 et 7, les éléments analogues à ceux du premier mode de réalisation portent des références identiques augmentées de 100. Le réducteur 101 de ce mode de réalisation comprend un bâti fixe 102 centré sur un axe X-X' sur lequel est également centré un pignon d'entrée 104 destiné à engrener avec un satellite 105 qui comprend un premier pignon 151 monté sur un arbre 151' intégré dans un barillet 160, plus particulièrement visible à la figure 7. Ce barillet définit un logement L₁ de réception du pignon 151.

Le pignon 151 engrène avec une denture 106 solidaire du bâti 102 et avec une denture 111 ayant un nombre de dents différent et solidaire d'une bride 109 constituant l'organe de sortie du réducteur 101.

Le barillet 160 définit également un logement L₂ de réception d'un second pignon 152 et un logement L₃ de réception d'un troisième pignon 153 appartenant au satellite 105.

Le barillet 160 intègre un arbre 154 globalement parallèle à l'arbre 103 du pignon d'entrée 104 qui est parallèle à l'axe X-X' et à l'arbre 151'. L'arbre 154, qui est représenté par son axe géométrique X₁₅₄ à la figure 7, débouche dans les logements L₂ et L₃.

L'axe géométrique X₁₅₁ du pignon 151 est également représenté à la figure 7.

Le barillet 160 définit un volume V intérieur dans lequel est reçu le pignon 104 en configuration montée du réducteur 101.

Le second pignon 152 engrène avec la denture 111 alors que le troisième pignon 153 engrène avec la denture 106, ces pignons ayant des nombres de dents identiques.

Le second pignon 152 est solidaire en translation et en rotation avec l'arbre 154 alors que le troisième pignon 153 est chargé par un effort E exercé par un ressort 157 en direction d'un élément d'arrêt 155 formé par une goupille, du type de la goupille 55 du premier mode de réalisation, cet élément étant solidaire de l'arbre 154.

Le ressort 157 est intercalé entre le pignon 153 et une surface 161 du barillet 160 délimitant le fond du logement L3.

Comme précédemment, une ou plusieurs butées 114 sont formées sur la face interne d'une cloison 113 du bâti 102.

En cas de rupture de l'un des composants du réducteur, le fonctionnement est analogue à celui du réducteur du premier mode de réalisation. En résumé, le troisième pignon 153 se décale angulairement par rapport à la goupille 155 et échappe à celle-ci. Il vient alors se bloquer contre l'une des butées 114, sous l'effet de l'effort E.

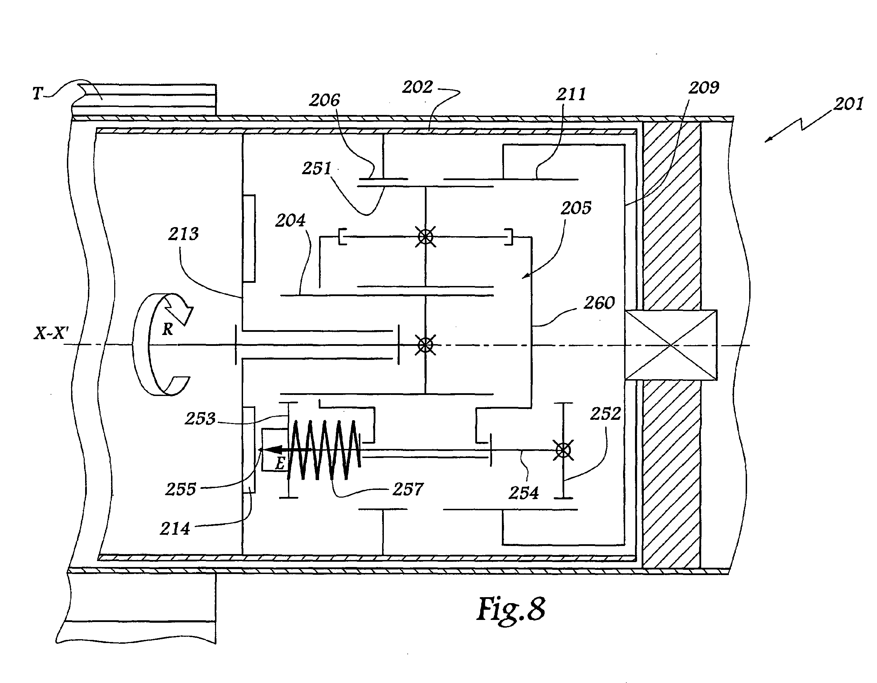

Dans le troisième mode de réalisation de l'invention représenté à la figure 8, les éléments analogues à ceux du premier mode de réalisation portent des référence identiques augmentées de 200. Le réducteur 201 de ce mode de réalisation comprend un bâti 202 centré sur un axe X-X'. Ce bâti 202 porte, sur sa cloison d'extrémité 213, des butées 214.

Le pignon d'entrée 204 du réducteur engrène avec un satellite 205 qui comprend un premier pignon 251 en prise respectivement avec une denture 206 solidaire du bâti 202 et une denture 211 solidaire d'une bride 209 de sortie du réducteur.

Un barillet 260 permet de soutenir un arbre 254 sur lequel sont montés un second pignon 252 et un troisième pignon 253 à la façon décrite pour le second mode de réalisation.

Le troisième pignon est soumis à un effort E exercé par un ressort 257, cet effort ayant tendance à le plaquer contre une goupille d'arrêt 255.

Ce mode de réalisation diffère du précédent en ce que le troisième pignon 253 engrène non pas avec la denture 206 solidaire du bâti 202 mais avec le pignon d'entrée 204, le second pignon 252 engrenant avec la denture 211, comme le second pignon 152 du second mode de réalisation engrène avec la denture 111.

Comme précédemment, en cas de rupture de l'un des composants du réducteur 201, le décalage angulaire du troisième pignon 253 par rapport à l'arbre 254 lui permet d'échapper à la goupille 255 et venir se bloquer contre l'une des butées 214.

Dans les second et troisième modes de réalisation, le blocage du troisième pignon 153 ou 253 bloque le barillet 160 ou 260 dans sa rotation autour de l'axe X-X' du réducteur, ce qui a pour effet de bloquer la denture de sortie 111 ou 211 et la bride 109 ou 209 correspondante.

Dans les second et troisième modes de réalisation, la géométrie et le positionnement du barillet 160 ou 260 sont tels que l'arbre 154 ou 254 est entraîné en rotation autour de l'axe X-X' lorsque le pignon d'entrée 104 ou 204 tourne.

L'invention a été représentée avec un réducteur comprenant un unique satellite. Bien entendu elle est applicable avec un réducteur comprenant deux ou plus de deux satellites.

L'invention a été représentée avec un réducteur sans porte-satellites. Elle est bien entendu applicable avec un réducteur muni d'un porte-satellites.

L'invention a été représentée avec un satellite dont les premier, second et troisième pignons ont un même nombre de dents. Ceci n'est cependant pas obligatoire. En particulier, les second et troisième pignons 52, 53 ou analogues peuvent avoir des nombres de dents différents, pour autant que le nombre de dents des dentures 6 et 11 ou analogues est adapté.

En pratique, les vitesse angulaires des second et troisième pignons n'ont pas à être rigoureusement identiques dans la mesure ou une différence peu importante de ces vitesses peut résulter dans un décalage angulaire faible du pignon 53 par rapport à l'arbre 54. Ainsi, pour autant que ce faible décalage n'amène pas la goupille 55 dans la position de la figure 5 sur une course correspondant à l'enroulement ou au déroulement complet du tablier, le réducteur fonctionne correctement. De même en est-il en ce qui concerne les second et troisième modes de réalisation.

Bien qu'il s'agisse d'une application particulièrement avantageuse, l'invention n'est pas limitée au domaine des mécanismes de fermeture ou de protection solaire. Elle peut être mise en oeuvre dans tout domaine où une sécurisation d'un réducteur épicycloïdal est recherchée.

## Revendications

1. Réducteur épicycloidal (1) incluant au moins un satellite (5;105;205) susceptible d'un mouvement de rotation autour d'un axe principal dudit réducteurs (1) et comprenant un premier pignon (51;151;251) en prise avec deux dentures (6,11;106,111) pourvues de dents en nombres différents, **caractérisé en ce que** ledit satellite (5 ; 105 ; 205) comprend un second pignon (52 ; 152 ; 252) et un troisième pignon (53 ; 153 ; 253) respectivement en prise chacun avec une desdites dentures (6, 11 ; 106, 111) ou avec l'une desdites dentures (211) et avec un pignon d'entrée (204) du réducteur (1 ; 101 ; 201), ledit second pignon étant solidaire en rotation et en translation d'un arbre (54 ; 154 ; 254) apte à être entraîné en rotation par ledit premier pignon (51 ; 151 ; 251) autour dudit axe principal (X-X') alors que ledit troisième pignon est monté sur ledit arbre avec possibilité de rotation, en étant chargé (E) contre un élément d'arrêt (55 ; 155 ; 255) solidaire en rotation et en translation avec ledit arbre, ledit troisième pignon étant apte à échapper audit élément, par un mouvement de rotation autour dudit arbre, et à venir en prise contre une butée (14 ; 114 ; 214) de blocage de la rotation dudit satellite autour dudit axe (X-X'), lesdits second et troisième pignons ayant, en fonctionnement normal dudit réducteur, sensiblement la même vitesse angulaire de rotation.

2. Réducteur selon la revendication 1, **caractérisé en ce que** ledit arbre (54) traverse ledit premier pignon (51), avec possibilité de rotation.

3. Réducteur selon la revendication 1, **caractérisé en ce que** ledit arbre (154 ; 254) est intégré dans un barillet (160 ; 260) formant des logements de réception des premier, second et troisième pignons (151-153 ; 251-253).

4. Réducteur selon l'une des revendications précédentes, **caractérisé en ce qu'**il comprend des moyens (57 ; 157 ; 257) de charge élastique (E) dudit troisième pignon (53 ; 153 ; 253) en direction dudit élément d'arrêt (55 ; 155 ; 255) et/ou de ladite butée (14 ; 114 ; 214).

5. Réducteur selon les revendications 2 ou 3 et 4, **caractérisé en ce que** lesdits moyens de charge comprennent un ressort de compression (57) intercalé, autour dudit arbre (54), entre lesdits premier (51) et troisième (53) pignons ou entre ledit barillet (160 ; 260) et ledit troisième pignon (153 ; 253).

6. Réducteur selon l'une des revendications précédentes, **caractérisé en ce que** ledit élément d'arrêt forme au moins une saillie (55a, 55b) selon une direction essentiellement radiale par rapport audit arbre (54), ledit troisième pignon (53 ; 153 ; 253) étant pourvu d'au moins une encoche (56) de passage de ladite saillie, dans certaines orientations angulaires dudit troisième pignon par rapport audit arbre.

7. Réducteur selon l'une des revendications précédentes, **caractérisé en ce que** ladite butée (14 ; 114 ; 214) est formée sur une face interne (13a) d'une cloison (13 ; 113 ; 213) d'un bâti fixe (2 ; 102 ; 202) dudit réducteur (1 ; 101 ; 201).

8. Réducteur selon la revendication 5, **caractérisé en ce que** ledit bâti (2 ; 102 ; 202) porte plusieurs butées (14 ; 114 ; 214) réparties circulairement autour d'un axe central (X-X') dudit réducteur.

9. Réducteur selon l'une des revendications précédentes, **caractérisé en ce que** lesdits premier, second et troisième pignons (51-53 ; 151-153) ont un même nombre de dents, lesdits premier et second pignons engrenant ensemble sur la première (11 ; 111) desdites deux dentures alors que lesdits premier et troisième pignons engrènent ensemble sur la seconde (6 ; 106) desdites deux dentures.

10. Réducteur selon l'une des revendications précédente, **caractérisé en ce que** l'une au moins desdites dentures (6, 11 ; 106, 111 ; 206, 211) en prise avec ledit premier pignon porte un élément (15) de maintien axial dudit satellite (5 ; 105 ; 205).

11. Réducteur selon l'une des revendications précédentes, **caractérisé en ce qu**'il comprend un arbre d'entrée (3 ; 103) solidaire d'un pignon central (4 ; 104 ; 204) en prise avec ledit premier pignon (51 ; 151 ; 251), l'organe de sortie (9 ; 109 ; 209) dudit réducteur (1 ; 101 ; 201) étant solidaire de l'une desdites deux dentures (6, 11 ; 106, 111 ; 106, 211).

12. Réducteur selon l'une des revendications précédentes, **caractérisé en ce qu**'il est irréversible.

13. Mécanisme de manoeuvre d'une installation de fermeture ou de protection solaire comprenant un organe d'entraînement, mécanique ou électrique, d'un arbre d'enroulement (10) d'un tablier (T) et au moins un réducteur (1 ; 101 ; 201) selon l'une des revendications précédentes monté entre un arbre de sortie dudit organe d'entraînement et ledit arbre d'enroulement.

## Claims

1. Epicyclic reducer (1) including at least one planet gear (5; 105; 205) capable of rotational movement around a main axis of said reducer (1) and containing a first gear wheel (51; 151; 251) engaging with two cogs (6, 11; 106, 111) equipped with different numbers of teeth, **characterised in that** the planet gear (5; 105; 205) contains a second gear wheel (52; 152; 252) and a third gear wheel (53; 153; 253), each engaging with one of the cogs (6, 11; 106, 111) or with one of the cogs (211) and an input gear wheel (204) of the reducer (1; 101; 201) respectively, the second gear wheel being integral in rotation and translation with a shaft (54, 154; 254) able to be driven in rotation by the first gear wheel (51; 151; 251) around the main axis (X-X'), while the third gear wheel is mounted on the shaft with the ability to rotate, being loaded (E) against a stop element (55; 155; 255) integral in rotation and translation with the shaft, the third gear wheel being able to move away from said element by a rotational movement around the shaft and engage against a thrust bearing (14; 114; 214) stopping the rotation of the planet gear around the axis (X-X'), the second and third gear wheels having approximately the same angular rotation velocity in normal operation of the reducer.

2. Reducer according to claim 1, **characterised in that** the shaft (54) passes through the first gear wheel (51) with the capability to rotate.

3. Reducer according to claim 1, **characterised in that** the shaft (154; 254) is integrated in a cylinder (160; 260) forming housings to take the first, second and third gear wheels (151-153; 251-253).

4. Reducer according to one of the previous claims, **characterised in that** it comprises means (57; 157; 257) of elastic loading (E) of the third gear wheel (53; 153; 253) in the direction of the stop element (55; 155; 255) and/or the thrust bearing (14; 114; 214).

5. Reducer according to claims 2 or 3 and 4, **characterised in that** the loading means comprise a compression spring (57) inserted around the shaft (54) between the first (51) and third (53) gear wheels or between the cylinder (160; 260) and the third gear wheel (153; 253).

6. Reducer according to one of the previous claims, **characterised in that** the stop element forms at least one projection (55a, 55b) in a basically radial direction in relation to the shaft (54), the third gear wheel (53; 153; 253) being provided with at least one groove (56) for the projection to pass through in certain angular orientations of the third gear wheel in relation to the shaft.

7. Reducer according to one of the previous claims, **characterised in that** the thrust bearing (14; 114; 214) is formed on an internal face (13a) of a wall (13; 113; 213) of a fixed frame (2; 102; 202) of the reducer (1; 101; 201).

8. Reducer according to claim 5, **characterised in that** the frame (2; 102; 202) has several thrust bearings (14; 114; 214) distributed in a circle around a central axis (X-X') of the reducer.

9. Reducer according to one of the previous claims, **characterised in that** the first, second and third gear wheels (51-53; 151-153) have the same number of teeth, the first and second gear wheels meshing together on the first (11; 111) of the two cogs while the first and third gear wheels mesh together on the second (6; 106) of the two cogs.

10. Reducer according to one of the previous claims, **characterised in that** at least one of the cogs (6, 11; 106, 111; 206, 211) engaging with the first gear wheel has an element (15) holding the planet gear (5; 105; 205) axially.

11. Reducer according to one of the previous claims, **characterised in that** it comprises an input shaft (3; 103) integral with a central gear wheel (4; 104; 204) engaging with the first gear wheel (51; 151; 251), the output device (9; 109; 209) of the reducer (1; 101; 201) being integral with one of the two cogs (6, 11; 106, 111; 206, 211).

12. Reducer according to one of the previous claims, **characterised in that** it is irreversible.

13. Mechanism for actuating a sunshade comprising a mechanical or electrical device driving a winding shaft (10) of a shutter (T) and at least one reducer (1; 101; 201) according to one of the previous claims mounted between an output shaft of the drive device and the winding shaft.

## Patentansprüche

1. Epizyklisches Untersetzungsgetriebe (1), mindestens ein Planetenrad (5; 105; 205) einschließend, das für eine Drehbewegung um eine Hauptachse des Untersetzungsgetriebes (1) geeignet ist, und ein Zahnrad (51; 151; 251) im Eingriff mit zwei Verzahnungen (6, 11; 106, 111) umfasst, die mit Zähnen unterschiedlicher Anzahl versehen sind, **dadurch gekennzeichnet, dass** das Planetenrad (5; 105; 205) ein zweites Zahnrad (52; 152; 252) und ein drittes Zahnrad (53; 153; 253) umfasst, die jeweils im Eingriff mit einer der Verzahnungen (6, 11; 106, 111) oder mit der einen der Verzahnungen (211) und mit einem Eingangszahnrad (204) des Untersetzungsgetriebes (1; 101; 201) sind, wobei das zweite Zahnrad hinsichtlich Rotation und Translation fest mit einer Welle (54; 154; 254) verbunden ist, die geeignet ist, zur Drehung durch das erste Zahnrad (51; 151; 251) um die Hauptachse (X-X') angetrieben zu werden, während das dritte Zahnrad auf der Welle mit Drehmöglichkeit angeordnet ist, wobei es gegen ein Anschlagelement (55; 155; 255) vorgespannt (E) ist, das bezüglich Rotation und Translation fest mit der Welle verbunden ist, wobei das dritte Zahnrad geeignet ist, sich diesem Element durch eine Drehbewegung um die Welle zu entziehen und in Eingriff gegen einen Anschlag (14; 114; 214) zur Blockierung der Drehung des Untersetzungsgetriebes um die Achse (X-X') zu kommen, wobei das zweite und das dritte Zahnrad im normalen Betrieb des Untersetzungsgetriebes im Wesentlichen die gleiche Winkeldrehgeschwindigkeit haben.

2. Untersetzungsgetriebe nach Anspruch 1, **dadurch gekennzeichnet, dass** die Welle (54) das erste Zahnrad (51) mit der Möglichkeit der Drehung durchquert.

3. Untersetzungsgetriebe nach Anspruch 1, **dadurch gekennzeichnet, dass** die Welle (154; 254) in einem zylinderförmigen Gehäuse (160; 260) integriert ist, das Aufnahmeräume für das erste, zweite und dritte Zahnrad (151 - 153; 251 - 253) bildet.

4. Untersetzungsgetriebe nach einem der vorhergehenden Ansprüche, **dadurch gekennzeichnet, dass** es Mittel (57; 157; 257) zur elastischen Vorspannung (E) des dritten Zahnrads (53; 153; 253) in Richtung des Anschlagelements (55; 155; 255) und/oder des Anschlags (14; 114; 214) umfasst.

5. Untersetzungsgetriebe nach einem der Ansprüche 2 oder 3 und 4, **dadurch gekennzeichnet, dass** die Vorspannmittel eine Kompressionsfeder (57) umfassen, die um die Welle (54) herum zwischen dem ersten (51) und dem dritten (53) Zahnrad oder zwischen dem zylinderförmigen Gehäuse (160; 260) und dem dritten Zahnrad (153; 253) angeordnet ist.

6. Untersetzungsgetriebe nach einem der vorhergehenden Ansprüche, **dadurch gekennzeichnet, dass** das Anschlagelement mindestens einen Vorsprung (55a, 55b) entsprechend einer im Wesentlichen radialen Richtung in Bezug auf die Welle (54) bildet, wobei das dritte Zahnrad (53; 153; 253) mit mindestens einer Ausnehmung (54) für den Durchgang des Vorsprungs in bestimmten Winkelorientationen des dritten Zahnrads in Bezug auf die Welle versehen ist.

7. Untersetzungsgetriebe nach einem der vorhergehenden Ansprüche, **dadurch gekennzeichnet, dass** der Anschlag (14; 114; 214) auf einer Innenfläche (13a) einer Trennwand (13; 113; 213) eines feststehenden Gehäuses (2; 102; 202) des Untersetzungsgetriebes (1; 101; 201) ausgebildet ist.

8. Untersetzungsgetriebe nach Anspruch 5, **dadurch gekennzeichnet, dass** das Gehäuse (2; 102; 202) mehrere Anschläge (14; 114; 214) trägt, die kreisförmig um eine Mittelachse (X-X') des Untersetzungsgetriebes herum angeordnet sind.

9. Untersetzungsgetriebe nach einem der vorhergehenden Ansprüche, **dadurch gekennzeichnet, dass** das erste, zweite und dritte Zahnrad (51 - 53; 151 - 153) eine gleiche Anzahl von Zähnen haben, wobei das erste und zweite Zahnrad zusammen in die erste (11; 111) der zwei Verzahnungen greifen, während das erste und dritte Zahnrad zusammen in die zweite (6; 106) der zwei Verzahnungen eingreifen.

10. Untersetzungsgetriebe nach einem der vorhergehenden Ansprüche, **dadurch gekennzeichnet, dass** mindestens eine der verzahnungen (6, 11; 106, 111; 206, 211) im Eingriff mit dem ersten Zahnrad ein Element (15) zum axialen Halten des Planetenrads (5; 105; 205) trägt.

11. Untersetzungsgetriebe nach einem der vorhergehenden Ansprüche, **dadurch gekennzeichnet, dass** es eine Eingangswelle (3; 103) umfasst, die fest mit einem zentralen Zahnrad (4; 104; 204) im Eingriff mit dem ersten Zahnrad (51; 151; 251) verbunden ist, wobei das Ausgangselement (9; 109; 209) des Untersetzungsgetriebes (1; 101; 201) fest mit einer der zwei Verzahnungen (6, 11; 106, 111; 106, 211) verbunden ist.

12. Untersetzungsgetriebe nach einem der vorhergehenden Ansprüche, **dadurch gekennzeichnet, dass** es irreversibel ist.

13. Betätigungseinrichtung für eine Verschließ- oder Sonnenschutzeinrichtung, ein mechanisches oder elektrisches Antriebselement einer Welle zum Aufwickeln (10) einer Schürze (T) und mindestens ein Untersetzungsgetriebe (1; 101; 201) nach der vorhergehenden Ansprüche umfassend, das zwischen einer Ausgangswelle des Antriebselements und der Aufwickelwelle angeordnet ist.
